# EUROPÄISCHE PATENTSCHRIFT

(11) **EP 3 231 070 B1**
(45) Veröffentlichungstag und Bekanntmachung des Hinweises auf die Patenterteilung: **07.08.2019**
(21) Anmeldenummer: 15805517.8
(22) Anmeldetag: 08.12.2015
(51) Int. Cl.: H02K 21/16, H02K 1/14, H02K 1/20, H02K 1/27, H02K 1/32

(54) **PERMANENTERREGTE ELEKTRISCHE MASCHINE**
PERMANENTLY EXCITED ELECTRIC MACHINE
MOTEUR ÉLECTRIQUE À EXCITATION PERMANENTE

(30) Priorität: 10.12.2014 DE 102014018309
(43) Veröffentlichungstag der Anmeldung: 18.10.2017
(73) Patentinhaber: eMoSys GmbH, 82319 Starnberg (DE)
(72) Erfinder: GRUENDL, Andreas, 82319 Starnberg (DE); HOFFMANN, Bernhard, 82319 Starnberg (DE)
(74) Vertreter: Schmidt, Steffen J.
(86) Internationale Anmeldenummer: PCT/EP2015/079026
(87) Internationale Veröffentlichungsnummer: WO 2016/091906

(56) Entgegenhaltungen:
- EP-A1- 0 013 157
- EP-A2- 0 627 805
- US-A- 4 445 062

## Beschreibung

### Hintergrund

Vorgestellt wird eine permanenterregte elektrische Maschine, die auch für hohe Drehzahlen zwischen 10.000 und 100.000 Umdrehungen pro Minute oder mehr auslegbar ist und für die Serienfertigung gut geeignet ist. Insbesondere geht es um eine permanenterregte elektrische Maschine mit einem Ständer und einem Läufer, von denen einer, zum Beispiel der Ständer, eine Spulenanordnung zur Magnetfelderzeugung und der andere, zum Beispiel der Läufer, Permanentmagnet-Elemente zur Interaktion mit dem durch die Spulenanordnung erzeugten Magnetfeld hat.

Drehfeldmaschinen mit permanenterregtem Läufer haben in den letzten Jahren an Bedeutung gewonnen, da sie einige wesentliche Vorteile bieten. Der unbewickelte Läufer dieser Maschinen lässt sich gut für hohe Drehzahlen ausführen. Die verfügbaren Magnetwerkstoffe ermöglichen eine sehr hohe Maschinenausnutzung. Da die Drehmomentbildung ohne Läuferströme erfolgt, entstehen mit Ausnahme parasitärer Zusatzverluste im Läufer kaum Verluste. Außerdem haben diese Maschinen einen sehr guten Wirkungsgrad.

### Begriffsdefinitionen

Unter dem Begriff "elektrische Maschine" sind hier sowohl motorisch als auch generatorisch betriebene Maschinen verstanden, als auch Maschinen, die zwischen diesen beiden Betriebsarten wechselnd betrieben werden. Dabei ist es für die hier vorgestellte Anordnung unerheblich, ob eine solche Maschine als Innenläufermaschine oder als Außenläufermaschine ausgestaltet ist.

### Stand der Technik

Bei der Befestigung von Permanentmagneten am Läufer einer elektrischen Maschinen besteht die Gefahr, dass das spröde Sintermaterial der Magnete bricht. Dies kann insbesondere durch thermische Spannungen aufgrund der unterschiedlichen Wärmeausdehnungskoeffizienten von Magnet- und Läufermaterial begünstigt werden. Werden die Magnete nur durch eine Klebverbindung auf dem Läufer befestigt, gerät das Magnetmaterial bei einem Bruch in den Luftspalt der Maschine und die Maschine fällt aus.

Die EP 0 627 805 A2 betrifft eine permanenterregte elektrische Maschine, mit einem Ständer und einem Läufer, wobei der Ständer eine Spulenanordnung aufweist und der Läufer mit Permanentmagnet-Elementen versehen ist. Der Ständer ist unter Bildung eines Luftspaltes von dem Läufer beabstandet angeordnet. Er hat mehrere zum Luftspalt hin orientierte Segmente mit zueinander benachbarten Zentralpolen mit einer Wicklung der Spulenanordnung und zwei Seitenpole zum Luftspalt hin. Jedes der Permanentmagnet-Elemente ist magnetisch im Wesentlichen tangential orientiert. Zwei zueinander benachbarte Permanentmagnet-Elemente sind magnetisch entgegengesetzt orientiert.

Die EP 0 013 157 A1 betrifft einen Rotor mit einem unmagnetischen Läuferrücken, und mehreren zueinander benachbarten, magnetisch leitenden Magnetfluss-Polen mit in axialer Richtung hohlprismatischer Gestalt mit Kühlkanälen. Der Rotor hat eine im Querschnitt etwa kreisringsegmentförmige oder trapezförmige Gestalt, deren längere konzentrische bzw. parallele Seite zum Luftspalt hin weist. Zwischen zwei zueinander benachbarten Magnetfluss-Polen ist jeweils ein Permanentmagnet-Element aufgenommen. Jeweils ein Permanentmagnet-Element hat eine im Querschnitt etwa kreisringsegmentförmige oder trapezförmige Gestalt, und dessen kürzere konzentrische bzw. parallele Seite weist zum Luftspalt hin und dessen beide schrägen Seiten sind zu den jeweiligen gegengleichen schrägen Seiten der Magnetfluss-Pole hin orientiert.

Die US 4 445 062 A betrifft einen Rotor mit sich radial nach außen verjüngenden Permanentmagneten, die zwischen Verankerungen aufgenommen sind, die mit gewellten Flanken an dem Rotorkörper verankert sind.

FR 2 982 093 A1 (Valeo) offenbart einen Läufer einer elektrischen Maschine mit permanentmagnetischer Erregung. Der Läufer, gebildet aus einem Mittelteil sowie sich davon radial weg erstreckenden Laschen, welche die Polstücke halten, ist einstückig. Die Laschen und die Polstücke müssen zur Funktion der elektrischen Maschine magnetisch wirksam sein. Damit ist aber, weil einstückig mit den Laschen und den Polstücken, auch der Mittelteil aus demselben, magnetisch wirksamen Material. Zwischen den Polstücken befinden sich Permanentmagnet-Elemente mit in Längsrichtung verlaufenden Ausnehmungen zur Gewichtsersparnis.

Die Permanentmagnet-Elemente haben sich zuerst zum Luftspalt hin verbreiternden und dann parallelflankig gestaltete Seitenflächen. Die Permanentmagnet-Elemente sind durch tangential orientierte Vorsprünge an den Polstücken gehalten. Die zum Läuferrücken hin orientierte Seite jedes Permanentmagnet-Elements hat etwa 30% - 50% der Umfangslänge zum Luftspalt hin.

US 2012/0086294 A1 (Maximov et al) offenbart eine elektrische Maschine mit permanentmagnetischer Erregung. Diese elektrische Maschine hat Ständerpole mit zum Luftspalt hin orientierten Zentralpolen, die von einer jeweiligen Ständerwicklung umgeben sind und von zwei Seitenpolen eingefasst sind. Permanentmagnete sind an der inneren Oberfläche eines ringförmigen Magnetleiters angeordnet. Der ringförmige Magnetleiter ist aus ferromagnetischem Material.

Die WO 2007/119952 A1 beschreibt Aufnahmeelemente zur Aufnahme von bevorzugt trapezförmig ausgestalteten Permanentmagneten, die formschlüssig in korrespondierende Schwalbenschwanznuten eines Läuferelements einbringbar sind. Hieraus ergibt sich allerdings das Problem, dass die durch die Umdrehung des Läufers entstehende Krafteinwirkung der Magneten auf die Aufnahmeelemente bzw. die Seitenkanten der Schwalbenschanznuten nur unzureichend kompensiert werden kann, was nach einer gewissen Laufzeit des Läufers zum Bruch der Permanentmagnete führen kann.

Die deutsche Patentanmeldung DE 10 2008 023 999 A1 offenbart hierzu ein Vorrichtung zur Halterung von Magneten, insbesondere von Magneten in einem bewegten Bauteil, insbesondere in einem Läufer einer elektrischen Maschine, insbesondere in einem Blechpaket eines Elektromotors, mit einer Haltetasche, in die ein Magnet eingesetzt ist, der mittels eines Klebers befestigt ist, das sich beim Aushärten in einem vorbestimmten Ausmaß ausdehnt und das ein Treibmittel zum Aufschäumen eines Klebstoffs enthält. Nachteilig hierbei ist, dass die Permanentmagneten in den fest im Läuferpaket integrierten, durch Stanztechnik hergestellten Haltetaschen eingefasst sind. Dies resultiert einerseits in einer geringen Flexibilität bei der Montage eines entsprechenden Rotors bzw. Generators. Andererseits können Spannungen, die aufgrund von Zentrifugalkräften und unterschiedlicher Wärmeausdehnungskoeffizienten der Magnete und des Rotorkerns auftreten, durch den Klebstoff nur begrenzt kompensiert werden.

### Zugrundeliegendes Problem

Ausgehend hiervon stellt sich die Aufgabe, eine Befestigung für Permanentmagnete an einem Bauteil, insbesondere einem Läufer, einer elektrischen Maschine vorzuschlagen, welche die Permanentmagnete auch bei hohen Drehzahlen sicher hält und die Bruchgefahr für die Magneten minimiert. Darüber hinaus sollten die Permanentmagnete in der elektrischen Maschine möglichst einfach und flexibel montierbar sein.

### Lösung

Um dieses Ziel zu erreichen, wird hier eine permanenterregte elektrische Maschine mit den Merkmalen des Patentanspruchs 1 vorgeschlagen. Diese permanenterregte elektrische Maschine hat einen Ständer und einen Läufer. Entweder hat der Ständer eine Spulenanordnung und der Läufer ist mit Permanentmagnet-Elementen versehen, oder der Läufer hat eine Spulenanordnung und der Ständer ist mit Permanentmagnet-Elementen versehen. Der Ständer ist unter Bildung eines Luftspaltes von dem Läufer beabstandet angeordnet. Der Ständer hat mehrere Segmente mit zum Luftspalt hin orientierten, zueinander benachbarten Polen, von denen jeder eine konzentrierte Wicklung der Spulenanordnung trägt, oder nur jeder zweite jeweils eine konzentrierte Wicklung der Spulenanordnung trägt, und im letzteren Falle zwei Seitenpole zum Luftspalt hin hat. Ein ein- oder mehrteiliger, zumindest nahezu unmagnetischer Läuferrücken trägt, in radialer Richtung unverlierbar, an einer Seite mehrere zueinander benachbarte, magnetisch leitende Magnetfluss-Pole. Jeder Magnetfluss-Pol hat eine in axialer Richtung hohlprismatische Gestalt mit wenigstens einem Kühlkanal, wobei jeder Kühlkanal an seinen stirnseitigen Enden erste bzw. zweite Durchgangsöffnungen hat und zur Durchströmung mit einem Kühlfluid eingerichtet ist. Jeder Magnetfluss-Pol hat eine im Querschnitt etwa kreisringsegmentförmige oder trapezförmige Gestalt, wobei deren längere konzentrische bzw. parallele Seite zum Luftspalt hin orientiert ist. Zwischen zwei zueinander benachbarten Magnetfluss-Polen ist jeweils ein Permanentmagnet-Element aufgenommen. Jeweils ein Permanentmagnet-Element hat eine im Querschnitt etwa kreisringsegmentförmige oder trapezförmige Gestalt, und dessen kürzere konzentrische bzw. parallele Seite weist zum Luftspalt hin. Die beiden schrägen Seiten des Permanentmagnet-Elements sind zu den jeweiligen gegengleichen schrägen Seiten der Magnetfluss-Pole hin orientiert. Jedes Permanentmagnet-Element ist magnetisch im Wesentlichen tangential orientiert, und zwei zueinander benachbarte Permanentmagnet-Elemente sind magnetisch entgegengesetzt orientiert.

Jeder Zentralpol und seine jeweilige konzentrierte Wicklung sind mit einer Kühleinrichtung thermisch gekoppelt.

In einigen Positionen des Läufers relativ zum Ständer können wenigstens einige der Magnetfluss-Pole zumindest teilweise mit den Permanentmagnet-Elementen fluchten.

Dabei können zueinander benachbarte Segmente einen mittleren Pol (Zentralpol) und zwei Polhälften (Seitenpole) zu beiden Seiten hin haben, so dass sie in der Draufsicht eine M- oder E-förmige Querschnittsgestalt haben. Jedes Segment trägt jeweils eine konzentrierte Wicklung um seinen mittleren Pol. Am mittleren Pol jedes Ständersegments tritt an seiner dem Läufer zugewandten Polfläche je nach Stromrichtung ein Nord- oder Südpol auf. Die beiden freien Schenkel (Seitenpole) eines Segments haben jeweils etwa die halbe Fläche des Zentralpols und bilden zusammen mit dem jeweiligen angrenzenden Seitenpole je nach Stromrichtung den entgegengesetzten Pol (Süd- oder Nordpol). Diese Anordnung bietet die Möglichkeit, eine vorgefertigte Formspule einsetzen zu können, die gegenüber einer eingeträufelten Spule eine besseren Nutfüllfaktor (etwa 50% statt lediglich etwa 35%) hat und dementsprechend weniger ohmschen Widerstand. Außerdem kann bei dieser Konfiguration der Ständer eingekerbt werden, wodurch sich die Kühloberfläche fast verdoppelt.

### Vorteile, Ausgestaltungen und Weiterbildungen

Diese Anordnung hat gegenüber bekannten permanenterregten elektrischen Maschinen den Vorteil, dass sie sehr kompakt, mechanisch sehr stabil und hoch effizient ist. Diese Ausgestaltung eignet sich insbesondere für verhältnismäßig lange Innenläufermaschinen, da eine stabile Lagerung an beiden Stirnseiten des Läufers gut realisierbar ist. Damit ist auch bei hohen Drehzahlen ein sicherer und vibrationsarmer Betrieb bei hoher Leistungsdichte möglich. Die im Querschnitt kreisringsegmentförmige oder trapezförmige Gestalt der Permanentmagnet-Elemente und die gegengleich kreisringsegmentförmig oder trapezförmig gestalteten Magnetfluss-Pole bewirken eine auch bei sehr hohen Drehzahlen und daraus resultierenden Fliehkräften äußerst stabile Läuferanordnung. Damit sind trotz relativ feiner Polteilung (viele Nord-Süd-Magnetelemente pro Umfangs-Strecken-Einheit) ausgeprägte Pole bei geringen Streuflüssen möglich. Das ermöglicht in Zusammenhang mit der Sammlereigenschaft der Anordnung sehr hohe (z.B. 5-fach) Überlastfaktoren.

In einer Variante der permanenterregten elektrischen Maschine überragen zwei einander benachbarte Magnetfluss-Pole das zwischen ihnen aufgenommene Permanentmagnet-Element in radialer Richtung zum Luftspalt hin.

Der Läuferrücken ist in einer Variante der permanenterregten elektrischen Maschine aus lamelliertem und gegeneinander isoliertem Blechmaterial mit Blechdicken zwischen 0,5 und 5 mm gebildet. Jeder Magnetfluss-Pol kann ebenfalls aus lamelliertem und gegeneinander isoliertem Blechmaterial mit Blechdicken zwischen 0,025 und 0,5 mm gebildet sein. Dabei seien alle numerischen Zwischenwerte ebenfalls offenbart.

Die Permanentmagnet-Elemente können als Press-, Guss- oder Schnitt-Teile aus einer AlNi- oder AINiCo-Legierung, aus Barium- oder Strontiumferrit, aus einer SmCo-, oder NdFeB-Legierung gebildet sein. Damit sind Energieprodukte (BH)ₘₐₓ von Permanentmagneten im Bereich von etwa 30 bis etwa 300 Kilojoule/ Kubikmeter - auch im erhöhten Temperaturbereich von etwa 150 bis etwa 180 Grad Celsius - erreichbar.

Die Permanentmagnet-Elemente können auch als Bauteile aus magnetischen Pulverteilchen, auch als Sintermaterial oder eingebettet in temperaturbeständige Kunststoffbinder enthaltend zum Beispiel Polyamid, Polyphensulfid, Duroplast, Epoxidharz, oder dergl. gebildet sein. Es kann sich bei dem Kunststoffbinder auch um Methacrylatklebstoff, Epoxidharzklebstoff, Polyurethanklebstoff, Phenolharzklebstoff, Epoxidharz mit Faserverstärkung, oder hydrophobiertes Epoxidgießharz handeln.

Der Läuferrücken, die Magnetfluss-Pole, und / oder die Permanentmagnet-Elemente können an wenigstens einer ihrer Stirnseiten an eine erste und/oder zweite Deckscheibe anschließen, die mit Fluidleitblechen versehen sein können. Diese Fluidleitbleche können dazu eingerichtet und bestimmt sein, Kühlfluid zu/von den ersten bzw. zweiten Durchgangsöffnungen an den stirnseitigen Enden der Magnetfluss-Pole hin- bzw. wegzuleiten.

Die Fluidleitbleche an der ersten Deckscheibe können dazu eingerichtet und dimensioniert sein, als Kompressionsdüse zu wirken, und die Fluidleitbleche an der zweiten Deckscheibe können dazu eingerichtet und dimensioniert sein, als Expansionsdüse zu wirken. Letzteres ermöglicht, dass die Fluidleitbleche an der zweiten Deckscheibe die Wirkung einer Expansionsturbine entfalten, an der überschüssige Energie vom Einleiten des Kühlfluids in die Kühlkanäle (rück-)gewonnen werden kann.

Eine Wärmetauschereinrichtung kann vorgesehen sein, die dazu eingerichtet und dimensioniert sein kann, aus den zweiten Durchgangsöffnungen der Magnetfluss-Pole weggeleitetes Kühlfluid unter Wärmeenergieabgabe zu kühlen und gekühltes Kühlfluid zu den ersten Durchgangsöffnungen der Magnetfluss-Pole hinzuleiten. Diese Wärmetauschereinrichtung kann eine Kühlschnittstelle zu einer Gehäusewand der elektrischen Maschine und/oder zu einer Kühlschnittstelle an einem Ständerrücken der elektrischen Maschine haben.

An den Statorpolen (Zentral- und Seitenpolen) können Zahnköpfe angeordnet sein, die ein Teil des Zahnes sein können oder die mit Zähnen ohne Köpfe zur Verbesserung des Nutfüllfaktors in jeweilige Nutverschlüsse jeder Wicklung der Spulenanordnung integriert sein können , wobei die Nutverschlüsse den Ständer bzw. Läufer zum Luftspalt hin zumindest annähernd bündig und glatt abschließen. Diese Maßnahmen können dazu beitragen, dass Wirkungsgrad der Maschine, bedingt durch verringerten Strömungswiderstand im Luftspalt zunimmt; Läuferverluste können um bis zu Dreiviertel sinken, ohne dabei den Nutfüllfaktur der Ständerspulen sinken und damit die ohmschen Verluste steigen zu lassen.

Jeder Zentralpol und seine zwei Seitenpole können an ihrer vom Luftspalt abgewandten Außenseite von seinen benachbarten Zentralpolen und deren magnetischen Rückschlüssen zumindest teilweise abgeteilt sein. Hieraus ergibt sich für die Außenfläche des Ständers eine gegenüber einem durchgehenden Kreisringmantel erheblich vergrößerte Fläche. Dies verbessert die Wärmeabfuhr vom Ständer und erlaubt eine wesentlich bessere Kühlung.

Der Luftspalt zwischen den Magnetfluss-Polen einerseits und den Zentralpolen und deren magnetischen Rückschlüssen andererseits kann zwischen etwa 0,1 Millimeter und etwa 1,5 Millimeter oder mehr betragen, wobei auch alle dazwischen liegenden Werte als hier offenbart gelten. Dabei kann zum Erreichen eines im Spaltmaß im Wesentlichen konstanten Luftspaltes die Kontur der Zentralpole und deren magnetischen Rückschlüssen zum Luftspalt hin gegengleich zu den Magnetfluss-Polen gestaltet sein.

Die wie oben beschrieben gestalteten Magnetfluss-Pole mit ihrer, sich zum Luftspalt hin verbreiternden Querschnittsgestalt verringern oder minimieren die magnetischen Streuflüsse.

Zur Bildung der Spulenanordnung können Kupferlackdraht, Kupferflachbänder, oder Kupferlitzen bestehend aus lackisolierten Einzelleitern verwendet werden, die miteinander verdrillt oder verflochten sind. Mit derartigen Litzen kann der Erhöhung des Leiterwiderstandes bei höheren Frequenzen entgegengewirkt werden.

### Kurzbeschreibung der Figuren

Weitere Merkmale, Eigenschaften, Vorteile und mögliche Abwandlungen werden für einen Fachmann anhand der nachstehenden Beschreibung deutlich, in der auch auf die beigefügten Zeichnungen Bezug genommen ist.
Fig. 1 ist eine schematische Querschnittsdarstellung einer permanenterregten elektrischen Maschine.
Fig. 2a ist eine schematische vergrößerte Querschnittsdarstellung eines Magnetfluss-Pole der permanenterregten elektrischen Maschine aus Fig. 1.
Fig. 2b ist eine schematische vergrößerte Querschnittsdarstellung eines Permanentmagnet-Elements der permanenterregten elektrischen Maschine aus Fig. 1.
Fig. 2c ist eine schematische vergrößerte Querschnittsdarstellung zweier Zentralpole und deren magnetischen Rückschlüssen der permanenterregten elektrischen Maschine aus Fig. 1.
Fig. 3 ist eine schematische Längsschnittsdarstellung der permanenterregten elektrischen Maschine aus Fig. 1.

### Detaillierte Beschreibung der Ausführungsbeispiele

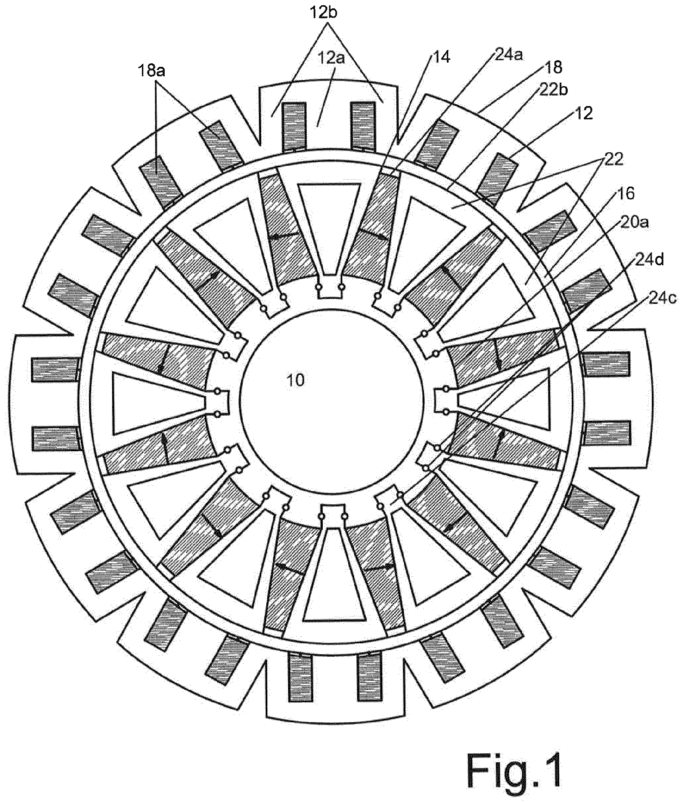

Fig. 1 zeigt einen Querschnitt durch eine permanenterregte elektrische Maschine, die in Form einer Innenläufermaschine ausgestaltet ist. Die elektrische Maschine 10 hat einen Ständer 12 und einen Läufer 14. In der hier veranschaulichten Variante hat der Ständer 12 eine Spulenanordnung 18, und der Läufer 10 ist mit Permanentmagnet-Elementen (→) versehen. Der Ständer 12 umgibt in der Variante der Fig. 1 unter Bildung eines Luftspaltes 16 den Läufer 14 konzentrisch. Der Ständer 12 hat hier mehrere Segmente mit zum Luftspalt 16 hin orientierten, zueinander benachbarten Zentralpolen 12a, von denen jeder jeweils eine konzentrierte Wicklung 18a der Spulenanordnung 18 trägt und zwei Seitenpole 12b zum Luftspalt 16 hin hat. Die Zentralpole 12a und ihre zwei Seitenpole 12b in den Ständersegmenten sind aus E-förmigen ferromagnetischen Blechen gestapelt, deren drei freie Enden zum Luftspalt 16 hinweisen. Das mittlere freie Ende bildet den Zentralpol 12a, der die konzentrierte Wicklung 18a trägt. Der Läuferrücken 20 ist aus lamelliertem und gegeneinander isoliertem Blechmaterial mit einer Blechdicke von etwa 0,5 mm gebildet.

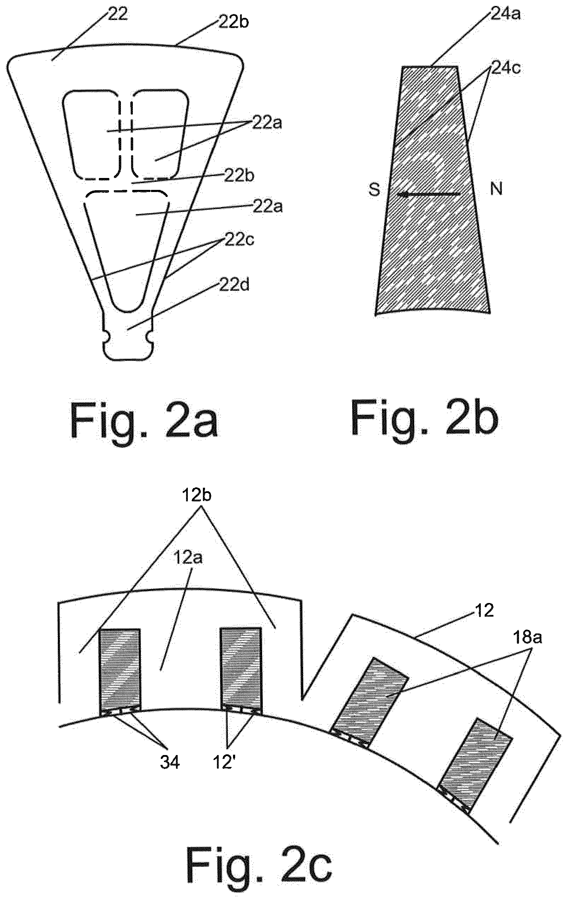

Ein in der veranschaulichten Variante einteiliger, praktisch unmagnetischer Läuferrücken 20 aus Aluminium, Edelstahl oder Titan trägt an seiner einen Seite 20a, hier der radial außen liegenden Außenseite, mehrere zueinander benachbarte, magnetisch leitende Magnetfluss-Pole 22 in radialer Richtung unverlierbar. Dazu ragen in entsprechende Nuten des Läuferrückens 20 Fortsätze 22d der Magnetfluss-Pole 22. Sowohl die Nuten als auch die Fortsätze haben an beiden Seiten halbrunde, sich zu Rundlöchern 24d ergänzende Ausnehmungen, in denen keramische Rundstäbe ein Herausgleiten der Magnetfluss-Pole 22 aus den Nuten des Läuferrückens 20 in radialer Richtung verhindern. Jeder Magnetfluss-Pol 22 hat in der vorliegenden Variante eine in axialer Richtung hohlprismatische Gestalt mit mehreren Kühlkanälen 22a (Siehe Fig. 2a). Die Magnetfluss-Pole 22 sind aus lamelliertem und gegeneinander isoliertem Blechmaterial mit einer Blechdicke von etwa 0,025 mm gebildet.

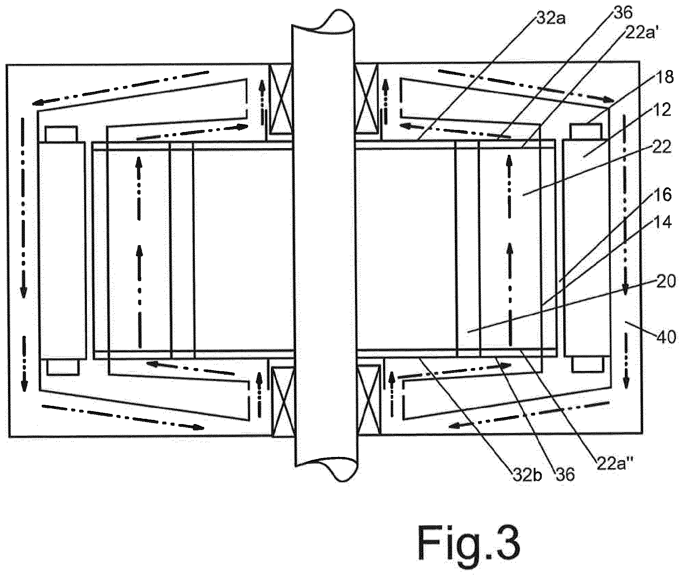

Jeder Kühlkanal 22a hat an seinen beiden stirnseitigen Enden erste und zweite Durchgangsöffnungen 22a', 22a" (Siehe Fig. 3) und ist zur Durchströmung mit einem Kühlfluid, hier bevorzugt Luft, eingerichtet. Bei der in Fig. 1 und Fig. 2a veranschaulichten Variante hat der Magnetfluss-Pol 22 eine im Querschnitt etwa kreisringsegmentförmige oder trapezförmige Gestalt. Die längere konzentrische Seite 22b (in Fig. 2a oben) weist zum Luftspalt 16 hin. Zwischen zwei zueinander benachbarten Magnetfluss-Polen 22 ist jeweils ein Permanentmagnet-Element N→S aufgenommen. Jeweils ein Permanentmagnet-Element → hat eine im Querschnitt den im Winkel zueinander stehenden Seiten der Magnetfluss-Pole 22 gegengleich entsprechende, etwa kreisringsegmentförmige oder trapezförmige Gestalt. Die kürzere konzentrische bzw. parallele Seite 24a des Permanentmagnet-Elements ist dabei zum Luftspalt 16 hin orientiert und die beiden im Winkel zueinander stehenden Seiten 24c ist zu den jeweiligen gegengleichen im Winkel zueinander stehenden Seiten 22c der Magnetfluss-Pole 22 hin orientiert.

Die Permanentmagnet-Elemente sind in der vorliegenden Variante aus einer NeFeB -Legierung eingebettet in Kunststoffbinder gebildet. Andere Legierungen sind selbstverständlich möglich. Die Permanentmagnet-Elemente → sind magnetisch im Wesentlichen tangential orientiert, und zwei zueinander benachbarte Permanentmagnet-Elemente → sind jeweils magnetisch entgegengesetzt orientiert. Zwei einander benachbarte Magnetfluss-Pole 22 überragen das zwischen ihnen aufgenommene Permanentmagnet-Element → in radialer Richtung zum Luftspalt 16 hin. Dies vermindert den Betrieb der Maschine störende magnetische Flüsse.

Jeder Zentralpol 12a und seine jeweilige konzentrierte Wicklung 14a sind mit einer Kühleinrichtung 40 in Form eines Wärmetauschers thermisch gekoppelt, der Wärme an das Maschinengehäuse und die Umgebung abgibt. Dazu kann die weiter unten im Detail beschriebene Läuferkühlung mit der Ständerkühleinrichtung kombiniert werden.

Wie auch in Fig. 2c veranschaulicht, ist jeder Zentralpol 12a und seine zwei Seitenpole 12b an ihrer vom Luftspalt 16 abgewandten Außenseite von seinen benachbarten Zentralpolen 12a und deren zwei Seitenpolen 12b zumindest teilweise abgeteilt. Damit ergibt sich eine "Kerbung" des Ständers entlang dessen Umfangs mit Einschnitten zwischen benachbarten Zentralpolen 12a und deren zwei Seitenpolen 12b, was zu einer Vergrößerung der Außenfläche des Ständers führt. Diese gegenüber einem kreiszylindrischen Ständer vergrößerte Außenfläche erleichtert die Abfuhr der Verlustwärme.

Wie in Fig. 3 veranschaulicht, sind der Läuferrücken 20, die Magnetfluss-Pole 22 und die Permanentmagnet-Elemente an ihren beiden Stirnseiten zwischen einer ersten und einer zweiten Deckscheibe 32a, 32b eingefasst. Diese Deckscheiben 32a, 32b sind mit Fluidleitblechen 36 versehen, die dazu eingerichtet und bestimmt sind, Kühlfluid, hier Luft, zu/von den ersten bzw. zweiten Durchgangsöffnungen an den stirnseitigen Enden der Magnetfluss-Pole 22 hin- bzw. wegzuleiten. Die hin- bzw. weggeleitete Luft kann entweder direkt aus der Umgebung herangeholt bzw. an die Umgebung abgegeben werden, oder, wie in der in Fig. 3 gezeigten Variante, durch den Wärmetauscher der Kühleinrichtung 40 zirkulieren. Die Kühleinrichtung 40 kühlt aus den zweiten Durchgangsöffnungen der Magnetfluss-Pole 22 weggeleitetes Kühlfluid unter Wärmeenergieabgabe an ein - nicht weiter veranschaulichtes Gehäuse der Maschine - und leitet gekühltes Kühlfluid zu den ersten Durchgangsöffnungen der Magnetfluss-Pole 22 hin. Dazu hat der Wärmetauscher eine Kühlschnittstelle zu einer Gehäusewand der elektrischen Maschine und zu einer Kühlschnittstelle an einem Ständerrücken der elektrischen Maschine.

An den Zentralpolen 12a des Ständers sind eisenhaltige Zahnköpfe 12' zur Verringerung der Verluste angeordnet. Diese Zahnköpfe 12' sind in jeweilige Nutverschlüsse 34 jeder Wicklung 14a der Spulenanordnung 14 integriert. Die Nutverschlüsse 34 schließen den Ständer 12 zum Luftspalt hin bündig und glatt ab.

Zur Bildung der Spulenanordnung können Litzen bestehend aus lackisolierten, miteinander verdrillten oder verflochtenen Einzelleitern verwendet werden. Dies wirkt der Erhöhung des Leiterwiderstandes bei höheren Frequenzen entgegen. In einem elektrischen Leiter entstehen durch magnetische Felder des Wechselstromes Wirbelströme, die dem Stromfluss entgegenwirken. Diese Wirbelströme nehmen bei höheren Frequenzen zu. Zum Gleichstromwiderstand addiert sich demnach ein von der Frequenz abhängiger Wechselstrom-Wirkwiderstand. Die Wirbelstromverluste sind beim Grund der durch die Magnetfluss-Joche gebildeten Nut am kleinsten und nehmen nach außen zum Luftspalt hin zu. Um die vorgenannten Verluste so gering wie möglich zu halten, wird der Leiterquerschnitt reduziert, was weniger Wirbelstromverluste hervorruft und führt dafür mehrere Leiter parallel. Um die Strom-Asymmetrie der einzelnen Leiter auszugleichen, werden die Leiter miteinander verdrillt oder verseilt. Eine unterschiedliche Koppelung der Streufelder mit den einzelnen parallel- geschalteten Leitern würde zu Ausgleichsströmen und zusätzlichen Verlusten führen. Die Verdrillung ist so gewählt, dass über die Länge der Litze gesehen die Position eines Drahtes gleichmäßig zwischen dem Nutgrund und der Nutöffnung abwechselt.

Der Einzelleiterquerschnitt sollte mit steigender Frequenz abnehmen; im Bereich um 1 kHz sollte der Einzelleiterquerschnitt etwa 0.4 mm betragen. Zur Verbesserung des Füllfaktors (Rauminhalt des Wickelraumes bezogen auf den Rauminhalt der elektrischen Leiters) setzt man vorzugsweise Litzen mit rechteckigem Profil oder ungleich dicke Runddrähte ein. Der Füllfaktorgewinn ergibt sich aus der Verdichtung der Litze, der besseren Füllung des Wickelraumes durch die Rechteckgeometrie. Der Einzelleiter ist vorzugsweise lackiert oder kann eine oder mehrere Umspinnungen / Umflechtungen mit unterschiedlichen Garnen, z.B. Polyamid, Baumwolle, Glas, Polyester, Aramid, usw. haben. Auch können eine oder mehrere Bandagierungen mit Polyesterfolien, Polyimidfolien, Aramidpapier, Glasbänder, etc. eingesetzt sein. Isolationen aus klebebeschichteten Folien wie Polyester und Polyimid werden wärmebehandelt, um eine gut verklebte Isolation zu erreichen. Kombinationen der vorgenannten Maßnahmen sind ebenfalls einsetzbar. Anstelle der Litzen kann auch eine massive Kupferleitung aus einem Kupferband die Wicklung bilden. Auch hierbei kann die Leitung verdrillt werden. Das Kupferband sollte in Richtung der Nut dünn sein.

Die vorstehend erläuterten Details sind zwar im Zusammenhang dargestellt; sie sind jedoch auch unabhängig von einander und auch frei miteinander entsprechend den Patentansprüchen kombinierbar.

Die in den Fig. gezeigten Verhältnisse der einzelnen Teile und Abschnitte hiervon zueinander und deren Abmessungen und Proportionen sind nicht einschränkend zu verstehen. Vielmehr können einzelne Abmessungen und Proportionen auch von den gezeigten Abmessungen und Proportionen entsprechend den Patentansprüchen abweichen.

## Patentansprüche

1. Permanenterregte elektrische Maschine (10), mit einem Ständer (12) und einem Läufer (14), wobei entweder der Ständer (12) eine Spulenanordnung (18) aufweist und der Läufer (10) mit Permanentmagnet-Elementen versehen ist, oder der Läufer eine Spulenanordnung aufweist und der Ständer mit Permanentmagnet-Elementen versehen ist,
- der Ständer (12)
- unter Bildung eines Luftspaltes (16) von dem Läufer (14) beabstandet angeordnet ist,
- mehrere zum Luftspalt (16) hin orientierte Segmente mit zueinander benachbarten Zentralpolen (12a) mit einer Wicklung (18a) der Spulenanordnung (18) und zwei Seitenpole (12b) zum Luftspalt (16) aufweist;
- ein ein- oder mehrteiliger, unmagnetischer Läuferrücken (20) an einer Seite (20a) mehrere zueinander benachbarte, magnetisch leitende Magnetfluss-Pole (22) in radialer Richtung unverlierbar trägt, wobei
- jeder Magnetfluss-Pol (22)
- eine in axialer Richtung hohlprismatische Gestalt mit wenigstens einem Kühlkanal (22a) hat, wobei jeder Kühlkanal (22a) an beiden stirnseitigen Enden erste und zweite Durchgangsöffnungen (22a', 22a") hat und zur Durchströmung mit einem Kühlfluid eingerichtet ist, und
- eine im Querschnitt etwa kreisringsegmentförmige oder trapezförmige Gestalt hat, wobei deren längere konzentrische bzw. parallele Seite (22b) zum Luftspalt hin weist, und
- zwischen zwei zueinander benachbarten Magnetfluss-Polen (22) jeweils ein Permanentmagnet-Element aufgenommen ist, wobei jeweils ein Permanentmagnet-Element
- eine im Querschnitt etwa kreisringsegmentförmige oder trapezförmige Gestalt hat, und
- dessen kürzere konzentrische bzw. parallele Seite (24a) zum Luftspalt hin weist, und dessen beide schrägen Seiten (24c) zu den jeweiligen gegengleichen schrägen Seiten (22c) der Magnetfluss-Pole (22) hin orientiert sind, wobei
- jedes der Permanentmagnet-Elemente magnetisch im Wesentlichen tangential orientiert ist, und zwei zueinander benachbarte Permanentmagnet-Elemente magnetisch entgegengesetzt orientiert sind, und wobei jeder Zentralpol (12a) und seine jeweilige konzentrierte Wicklung (14a) mit einer Kühleinrichtung thermisch gekoppelt sind.

2. Permanenterregte elektrische Maschine (10) nach Anspruch 1, wobei zwei einander benachbarte Magnetfluss-Pole (22) das zwischen ihnen aufgenommene Permanentmagnet-Element in radialer Richtung zum Luftspalt (16) hin überragen.

3. Permanenterregte elektrische Maschine (10) nach einem der Ansprüche 1 bis 2, bei der der Läuferrücken (20) aus lamelliertem und gegeneinander isoliertem Blechmaterial mit Blechdicken zwischen 0,5 und 5 mm gebildet ist, und / oder jeder Magnetfluss-Pol (22) aus lamelliertem und gegeneinander isoliertem Blechmaterial mit Blechdicken zwischen 0,025 und 0,5 mm gebildet ist.

4. Permanenterregte elektrische Maschine (10) nach einem der Ansprüche 1 bis 3, bei der die Permanentmagnet-Elemente aus einer AlNi- oder Al-NiCo-Legierung, aus Barium- oder Strontiumferrit, aus einer SmCo-, oder NdFeB-Legierung, auch als Sintermaterial oder eingebettet in Kunststoffbinder enthaltend Polyamid, Polyphensulfid, Duroplast, Epoxidharz, gebildet sind.

5. Permanenterregte elektrische Maschine (10) nach einem der Ansprüche 1 bis 4, bei der der Läuferrücken (20), die Magnetfluss-Pole (22), und / oder die Permanentmagnet-Elemente an wenigstens einer ihrer Stirnseiten an eine erste und/oder zweite Deckscheibe (32a, 32b) anschließen, die mit Fluidleitblechen (36) versehen sein können, die dazu eingerichtet und bestimmt sind, Kühlfluid zu/von den ersten bzw. zweiten Durchgangsöffnungen an den stirnseitigen Enden der Magnetfluss-Pole (22) hin- bzw. wegzuleiten.

6. Permanenterregte elektrische Maschine (10) nach Anspruch 5, bei der die Fluidleitbleche (36) an der ersten Deckscheibe (32a) dazu eingerichtet und dimensioniert sind, als Kompressionsdüse zu wirken, und die Fluidleitbleche (36) an der zweiten Deckscheibe (32b) dazu eingerichtet und dimensioniert sind, als Expansionsdüse zu wirken.

7. Permanenterregte elektrische Maschine (10) nach einem der Ansprüche 5 bis 6, bei der eine Wärmetauschereinrichtung vorgesehen sein kann, die dazu eingerichtet und dimensioniert sein kann, aus den zweiten Durchgangsöffnungen der Magnetfluss-Pole (22) weggeleitetes Kühlfluid unter Wärmeenergieabgabe zu kühlen und gekühltes Kühlfluid zu den ersten Durchgangsöffnungen der Magnetfluss-Pole (22) hinzuleiten, wobei die Wärmetauschereinrichtung eine Kühlschnittstelle zu einer Gehäusewand der elektrischen Maschine und/oder zu einer Kühlschnittstelle an einem Ständerrücken der elektrischen Maschine haben kann.

8. Permanenterregte elektrische Maschine (10) nach einem der Ansprüche 1 bis 7, bei der Zahnköpfe (12') an den Polen (12a) angeordnet sind, die in jeweilige Nutverschlüsse (34) jeder Wicklung (14a) der Spulenanordnung (14) integriert sein können, wobei die Nutverschlüsse (34) den Ständer (12) bzw. Läufer zum Luftspalt hin zumindest annähernd bündig und glatt abschließen.

9. Permanenterregte elektrische Maschine (10) nach einem der Ansprüche 1 bis 8, bei jeder Zentralpol (12a) und seine zwei Seitenpole (12b) an ihrer vom Luftspalt (16) abgewandten Außenseite von seinen benachbarten Zentralpolen (12a) und deren magnetischen Rückschlüssen (12b) zumindest teilweise abgeteilt ist.

## Claims

1. A permanently excited electrical machine (10), with a stator (12) and a rotor (14), wherein either the stator (12) comprises a coil arrangement (18) and the rotor (14) is provided with permanent magnet elements, or the rotor comprises a coil arrangement and the stator is provided with permanent magnet elements,
- the stator (12)
- is arranged spaced from the rotor (14) under forming an air gap (16),
- comprises several segments oriented towards the air gap (16) with mutually adjacent central poles (12a) with a winding of the coil arrangement (18) and two side poles (12b) towards the air gap (16);
- a one- or multipiece non-magnetic rotor back (20) captively carries several mutually adjacent, magnetic conductive magnetic flux poles (22) in the radial direction, wherein
- each magnetic flux pole (22)
- has a hollow prismatic shape with at least one cooling duct (22a), wherein each cooling duct (22a) has first and second through-holes (22a', 22a") in both end face ends and is adapted for flow of a cooling fluid, and
- in cross-section, has an approximately circular ring segment or trapezoidal shape, wherein its longer concentric or parallel, respectively, side (22h) faces the air gap, and
- one permanent magnet element each is accommodated between two mutually adjacent magnetic flux poles (22), wherein each one permanent magnet element each
- in cross-section, has an approximately circular ring segment or trapezoidal shape, and
- whose shorter concentric or parallel, respectively, side (24a) faces the air gap, and whose two inclined sides (24c) are oriented towards the respective opposite inclined sides (22c) of the magnetic flux poles (22), wherein
- each of the permanent magnet elements is magnetically oriented essentially tangentially and two mutually adjacent permanent magnet elements are magnetically opposed, and wherein each central pole (12a) and its respective concentric winding (14a) are thermally coupled with a cooling device.

2. The permanently excited electrical machine (10) according to Claim 1, wherein two mutually adjacent magnetic flux poles (22) extend beyond the permanent magnet element accommodated in between in the radial direction.

3. The permanently excited electrical machine (10) according to any of Claims 1 to 2, wherein the rotor back (20) is formed from laminated and insulated sheet metal material with sheet thicknesses between 0.5 and 5 mm, and/or
each magnetic flux pole (22) is formed from laminated and insulated sheet metal material with sheet thicknesses between 0.025 and 0.5 mm.

4. The permanently excited electrical machine (10) according to any of Claims 1 to 3, wherein the permanent magnet elements are formed from an AINi or AI-NiCo alloy, from barium or strontium ferrite, from an SmCo or NdFeB alloy, also as sinter material or are embedded in plastic binder containing polyamide, polyphensulfide, thermosetting plastic, epoxy resin.

5. The permanently excited electrical machine (10) according to any of Claims 1 to 4, wherein the rotor back (20), the magnetic flux poles (22) and/or the permanent magnet elements with at least one of their end face adjoin a first and/or a second cover disk (32a, 32b) which may be provided with fluid baffles (36) which are adapted and intended to supply cooling fluid to the first or second, respectively, through-holes in the face end ends of the magnetic flux poles (22) or to guide it away, respectively.

6. The permanently excited electrical machine (10) according to Claim 5, wherein the fluid baffles (36) at the first cover disk (32a) are adapted and dimensioned to act as a compression nozzle, and the fluid baffles (36) at the second cover disk (32b) are adapted and dimensioned to act as an expansion nozzle.

7. The permanently excited electrical machine (10) according to any of Claims 5 to 6, wherein a heat exchanger device may be provided which may be adapted and dimensioned to cool cooling fluid which is guided away from the second through-holes of the magnetic flux poles (22) while dissipating thermal energy and to guide cooled cooling fluid to the first through-holes of the magnetic flux poles (22), wherein the heat exchanger device may have a cooling interface to a casing wall of the electrical machine and/or to a cooling interface at a stator back of the electrical machine.

8. The permanently excited electrical machine (10) according to any of Claims 1 to 7, wherein tooth tips (12') are arranged at the poles (12a), which may be integrated in respective slot closures (34) of each winding (14a) of the coil arrangement (14), wherein the slot closures (34) close off the stator (12) or the rotor, respectively, towards the air gap at least approximately flush and smooth.

9. The permanently excited electrical machine (10) according to any of Claims 1 to 8, wherein each central pole (12a) and its two side poles (12b) are at least partially separated from their adjacent central poles (12a) and their magnetic yokes (12b) at their outside facing away from the air gap.

## Revendications

1. Machine électrique à excitation permanente (10), comportant un stator (12) et un rotor (14), dans laquelle soit le stator (12) comprend un agencement de bobine (18) et le rotor (10) est pourvu d'éléments magnétiques permanents, soit le rotor comprend un agencement de bobine et le stator est pourvu d'éléments magnétiques permanents,
- le stator (12)
- est disposé à distance du rotor (14) en formant un entrefer (16),
- comprend plusieurs segments orientés vers l'entrefer (16) avec des pôles centraux (12a) mutuellement adjacents comportant un enroulement (18a) de l'agencement de bobine (18), et deux pôles latéraux (12b) vers l'entrefer (16) ;
- un dos de rotor non magnétique (20) en une ou plusieurs parties porte de manière imperdable, dans la direction radiale, sur un côté (20a) plusieurs pôles de flux magnétique (22) magnétiquement conducteurs mutuellement adjacents, dans laquelle
- chaque pôle de flux magnétique (22)
- a une forme prismatique creuse dans la direction axiale avec au moins un canal de refroidissement (22a), chaque canal de refroidissement (22a) ayant des première et deuxième ouvertures de passage (22a', 22a") aux deux extrémités frontales et étant conçu pour être parcouru par un fluide de refroidissement, et
- a une forme approximativement en segment d'anneau de cercle ou trapézoïdale en section transversale, dont le côté concentrique ou parallèle plus long (22b) est tourné vers l'entrefer, et
- un élément magnétique permanent est logé, respectivement, entre deux pôles de flux magnétique mutuellement adjacents (22), dans laquelle un élément magnétique permanent respectif
- a une section transversale de forme approximativement en segment d'anneau de cercle ou trapézoïdale, et
- dont le côté concentrique ou parallèle (24a) le plus court est tourné vers l'entrefer, et les deux côtés obliques (24c) sont orientés vers les côtés obliques opposés respectifs (22c) des pôles de flux magnétique (22), dans laquelle
- chacun des éléments magnétiques permanents est orienté magnétiquement sensiblement tangentiellement, et deux éléments magnétiques permanents mutuellement adjacents sont orientés magnétiquement de manière opposée, et dans laquelle chaque pôle central (12a) et son enroulement concentré respectif (14a) sont couplés thermiquement à un moyen de refroidissement.

2. Machine électrique à excitation permanente (10) selon la revendication 1, dans laquelle deux pôles de flux magnétique mutuellement adjacents (22) dépassent l'élément magnétique permanent logé entre eux dans la direction radiale vers l'entrefer (16).

3. Machine électrique à excitation permanente (10) selon l'une des revendications 1 à 2, dans laquelle le dos de rotor (20) est formé d'un matériau en tôles stratifiés et mutuellement isolées avec des épaisseurs de tôle comprises entre 0,5 et 5 mm, et/ou
chaque pôle de flux magnétique (22) est formé d'un matériau en tôles stratifiés et mutuellement isolées avec des épaisseurs de tôle comprises entre 0,025 et 0,5 mm.

4. Machine électrique à excitation permanente (10) selon l'une des revendications 1 à 3, dans laquelle les éléments magnétiques permanents sont formés à partir d'un alliage AlNi ou Al-NiCo, de ferrite de baryum ou de strontium, d'un alliage SmCo ou NdFeB, également sous forme de matériau fritté ou noyé dans un liant plastique contenant du polyamide, du polysulfure de phénylène, une matière plastique thermodurcissable, de la résine époxy.

5. Machine électrique à excitation permanente (10) selon l'une des revendications 1 à 4, dans laquelle le dos de rotor (20), les pôles de flux magnétique (22) et/ou les éléments magnétiques permanents se raccordent par au moins l'une de leurs faces frontales à une première et/ou deuxième plaque de recouvrement (32a, 32b) qui peut être pourvue de déflecteurs de fluide (36) qui sont conçus et prévus pour diriger du fluide de refroidissement vers/depuis les premières ou deuxièmes ouvertures de passage aux extrémités frontales des pôles de flux magnétique (22).

6. Machine électrique (10) à excitation permanente selon la revendication 5, dans laquelle les déflecteurs de fluide (36) sur la première plaque de recouvrement (32a) sont conçus et dimensionnés pour servir de buse de compression, et les déflecteurs de fluide (36) sur la deuxième plaque de recouvrement (32b) sont conçus et dimensionnés pour servir de buse de détente.

7. Machine électrique à excitation permanente (10) selon l'une des revendications 5 à 6, dans laquelle un moyen d'échange de chaleur peut être prévu, qui peut être conçu et dimensionné pour refroidir du fluide de refroidissement conduit depuis les deuxièmes ouvertures de passage des pôles de flux magnétique (22) avec émission d'énergie thermique et pour diriger du fluide de refroidissement refroidi vers les premières ouvertures de passage des pôles de flux magnétique (22), le moyen d'échange de chaleur pouvant avoir une interface de refroidissement avec une paroi de boîtier de la machine électrique et/ou avec une interface de refroidissement sur un dos de stator de la machine électrique.

8. Machine électrique (10) à excitation permanente selon l'une des revendications 1 à 7, dans laquelle des têtes de dent (12') sont disposées sur les pôles (12a), qui peuvent être intégrées dans des fermetures d'encoche (34) respectives de chaque enroulement (14a) de l'agencement de bobine (14), les fermetures d'encoche (34) fermant le stator (12) ou le rotor vers l'entrefer au moins approximativement à fleur et à plat.

9. Machine électrique à excitation permanente (10) selon l'une des revendications 1 à 8, dans laquelle chaque pôle central (12a) et ses deux pôles latéraux (12b) sont séparés au moins partiellement sur leur côté extérieur opposé à l'entrefer (16) des pôles centraux (12a) qui lui sont adjacents, et de leurs culasses magnétiques (12b).
